# FASCICULE DE BREVET EUROPEEN

(11) **EP 1 369 175 B1**
(45) Date de publication et mention de la délivrance du brevet: **13.08.2014**
(21) Numéro de dépôt: 03291316.2
(22) Date de dépôt: 02.06.2003
(51) Int. Cl.: B01J 23/62, C10G 35/09

(54) **Lit homogène de catalyseur et procédé de transformation d'hydrocarbures en composés aromatiques avec ledit lit**
Homogenes Katalysatorbett und Verfahren zur Umwandlung von Kohlenwasserstoffen in aromatische Verbindungen davon
Homogeneous catalytic bed and method for transforming hydrocarbons into aromatic compounds therewith

(30) Priorité: 07.06.2002 FR 0207053
(43) Date de publication de la demande: 10.12.2003
(73) Titulaire: Institut Français du Pétrole, 92506 Rueil Malmaison Cedex (FR)
(72) Inventeur: Cauffriez, Hervé, 69530 Orlienas (FR); Le Peltier, Fabienne, 92500 Rueil Malmaison (FR)

(56) Documents cités:
- WO-A-99/22864
- FR-A- 2 422 711
- FR-A- 2 789 332
- US-A- 2 906 700
- US-A- 3 827 972
- US-A- 4 703 031
- US-A- 5 128 300
- US-A- 5 198 404

## Description

La présente invention concerne un lit homogène et des particules de catalyseur à effets bimétallique et bifonctionnel améliorés, les particules de catalyseur présentent des fluctuations locales en composition réduites, ce qui se traduit par des performances catalytiques, en particulier, des activités et des rendements essence très améliorés. Un tel lit est dit "homogène à l'échelle du micron". De telles particules peuvent même être dites "homogènes à l'échelle du nanomètre". L'invention a également pour objet un procédé de transformation d'hydrocarbures en composés aromatiques avec ce catalyseur, tel que le procédé de reformage des essences et le procédé de production d'aromatiques.
Les catalyseurs de reformage des essences et/ou de production d'aromatiques sont bien connus. Ils contiennent généralement une matrice, au moins un métal noble de la famille du platine, au moins un halogène et au moins un métal promoteur, encore appelé métal additionnel.
Parmi les métaux promoteurs, sont plus particulièrement utilisés l'étain pour les procédés régénératifs et le rhénium pour les procédés en lit fixe.
Les catalyseurs de reformage des essences et/ou de production d'aromatiques sont des catalyseurs bifonctionnels présentant deux fonctions essentielles pour l'obtention de performances correctes : une fonction hydro-déshydrogénante qui assure la déshydrogénation des naphtènes et l'hydrogénation des précurseurs de coke, et une fonction acide qui assure l'isomérisation des naphtènes et des paraffines et la cyclisation des paraffines longues. La fonction hydro-déshydrogénante peut être assurée par un oxyde tel l'oxyde de molybdène Mo0₃, l'oxyde de chrome Cr₂O₃ ou l'oxyde de gallium Ga₂O₃, ou par un métal de la colonne 10 (Ni, Pd, Pt). Il est connu que les métaux, en particulier le platine, sont nettement plus actifs que les phases oxydes pour les réactions d'hydro-déshydrogénation, c'est la raison pour laquelle les catalyseurs métalliques ont remplacé les catalyseurs oxydes supportés en reformage des essences et/ou production d'aromatiques Toutefois, les métaux tels le nickel, dans une moindre mesure le palladium et le platine, présentent également une activité hydrogénolysante au détriment du rendement en essence souhaitable en reformage des essences et/ou production d'aromatiques. Cette activité hydrogénolysante peut être fortement réduite, donc la sélectivité du catalyseur augmentée, par l'ajout d'un second métal tel l'étain. Par ailleurs, l'ajout d'un second métal tel l'iridium ou le rhénium augmente les propriétés hydrogénantes du platine, ce qui favorise l'hydrogénation des précurseurs de coke donc la stabilité du catalyseur. Ces diverses raisons ont favorisé le succès des catalyseurs bimétalliques par rapport aux catalyseurs monométalliques de première génération. Plus récemment, des catalyseurs trimétalliques ont été introduits, qui permettent de préserver la stabilité accrue des catalyseurs bimétalliques en augmentant les sélectivités essence de ces catalyseurs.
L'augmentation de la sélectivité peut ainsi être atteinte par divers moyens. Dans la demande de brevet WO 99/22864, le demandeur indique par exemple que les performances du catalyseur peuvent être nettement améliorées en contrôlant les fluctuations locales relatives du rapport des concentrations du métal noble (Pt) et du métal additionnel (M) d'une part et/ou des concentrations du métal noble et de l'halogène d'autre part. Il est ainsi obtenu une homogénéité de l'effet bimétallique métal noble - métal additionnel eVou de l'effet bifonctionnel métal noble-acide, au niveau du lit de particules, qui améliore les performances globales du procédé dans lequel est appliqué ce catalyseur.
Nous avons découvert, et ceci constitue l'objet de la présente invention, que les performances du catalyseur décrit dans la demande de brevet WO 99/22864 pouvaient être encore améliorées si le rapport M/Pt molaire est compris entre 2 et 5. Il a été par ailleurs trouvé qu'un tel catalyseur était particulièrement performant, lors d'une utilisation en reformage catalytique, à une pression inférieure à 0,4 MPa.
Plus précisément, l'invention concerne un catalyseur comprenant au moins une matrice amorphe, au moins un métal noble ce métal noble étant le platine, au moins un métal additionnel M choisi dans le groupe formé par l'étain, le germanium et le plomb, dans lequel le métal est l'étain et au moins un halogène, et dans lequel, pour une particule de catalyseur,
C_{Pt} est la concentration locale en métal noble Pt,
CM est la concentration locale en métal additionnel M,
C_{X} est la concentration locale en halogène,
ledit catalyseur étant sous la forme d'un lit homogène de particules de catalyseur dans lequel la dispersion locale de la valeur C_{Pt}/C_{M} est dite homogène ce qui correspond, à ce que au moins 70 % des valeurs C_{Pt}/C_{M} pour le lit de particules de catalyseur s'écartent d'au plus 30 % du rapport local moyen, et dans lequel le rapport molaire M/Pt au sein du catalyseur est compris entre 2 et 5.

La matrice amorphe du catalyseur est généralement un oxyde réfractaire tel que les oxydes de magnésium, de titane, de zirconium, l'alumine, la silice pris seuls ou en mélange entre eux. Le support préféré contient de l'alumine ou est de l'alumine.
Pour les réactions de reformage des essences eVou de production d'aromatiques, la matrice préférée est l'alumine, et avantageusement sa surface spécifique est de 50-600 m²/g et de préférence 150-400 m²/g_{.}
Le catalyseur contient également au moins un métal noble de la famille du platine, ce métal étant le platine.
Le métal additionnel M est sélectionné dans le groupe constitué par l'étain, le germanium, le plomb, dans lequel le métal M est l'étain. Dans le cas des procédés de reformage des essences et/ou de production d'aromatiques régénératifs en lit mobile, le métal est l'étain, et très avantageusement il est associé au platine (catalyseurs contenant platine, étain) et encore plus avantageusement, le catalyseur contient en outre du tungstène (catalyseurs contenant platine, étain, tungstène).
L'halogène est sélectionné dans le groupe constitué par le fluor, le chlore, le brome et l'iode. Le chlore est préféré.
Le catalyseur contient généralement de 0,01 à 2 % poids (pds) de métal noble, de 0,1 à 15 % poids d'halogène et plus de 0,1% à au plus 2 % poids de métal additionnel M. Dans ces conditions , le catalyseur présentera les meilleures performances dues à l'effet bimétallique optimisé.
Notons également que de façon préférée, le catalyseur mis en oeuvre dans les procédés de reformage des essences et/ou de production d'aromatiques, ne contient pratiquement pas d'alcalin.

Le catalyseur se présente dans le lit sous forme de particules qui peuvent être des billes, extrudés, trilobés ou toute forme communément utilisée.
On appelle C_{Pt} la concentration locale en métal noble, (exprimée en % pds) (le métal noble n'étant pas nécessairement du platine), C_{M} la concentration locale (en pds) du métal additionnel et C_{X} la concentration locale (en pds) en halogène.
On pourrait tout aussi bien exprimer les concentrations en % atomique, les fluctuations relatives étant les mêmes.
La composition globale du catalyseur peut être déterminée par fluorescence X sur le catalyseur à l'état pulvérulent ou par absorption atomique après attaque acide du catalyseur.
La mesure de la composition locale, à l'échelle du micron, par opposition à la composition globale du catalyseur, peut s'effectuer par microsonde électronique et complétée éventuellement par STEM (Scanning Transmission Electron Microscopy). Cette mesure peut s'effectuer en déterminant les teneurs en platine et métal additionnel sur des zones de quelques microns cubes le long du diamètre d'une particule de catalyseur qu'on appelle unités de mesure. Cette mesure permet d'évaluer la répartition macroscopique des métaux à l'intérieur des particules.
Les analyses sont conduites sur une microsonde électronique JEOL JXA 8800 (appareillage préféré) ou éventuellement sur CAMEBAX type Microbeam, chacune équipée de 4 spectromètres à dispersion de longueur d'onde. Les paramètres d'acquisition sont les suivants : tension d'accélération 20 kV, courant 30 nA., raies Pt Mα, Sn Lα, Cl Kα, et temps de comptage 20 s ou 40 s selon le niveau de concentration.
Les particules sont enrobées dans de la résine puis polies jusqu'à leur diamètre.
On notera que l'appellation "diamètre" ne se réfère pas uniquement à une forme en bille ou en extrudé, mais plus généralement à toute forme de particule ; est dénommé diamètre, en fait, la longueur représentative de la particule sur laquelle est effectuée la mesure.
Les analyses sont effectuées sur un échantillon représentatif du lit ou du lot de catalyseur qui sera utilisé pour un lit catalytique. On a considéré que les analyses devraient être faites sur au moins 5 particules avec au moins 30 mesures par particule, uniformément réparties le long du diamètre.

On appelle C_{Pt} la concentration locale en métal noble (exprimée en % pds), C_{M} la concentration locale (en pds) du métal additionnel et C_{X} la concentration locale (en pds) en halogène.
A partir des mesures locales de C_{Pt}, C_{M} et C_{X} (mesures correspondant à une position déterminée sur le diamètre d'une particule) les rapports locaux C_{Pt}/C_{M} et/ou C_{Pt}/C_{X} peuvent être calculés.
Pour chaque position radiale, un rapport local moyen [C_{Pt}/C_{M}]ₘ et/ou [C_{Pt}/C_{X}]ₘ est calculé (moyenne des rapports locaux correspondant à différentes particules).
On peut ainsi déterminer les valeurs absolues des différences entre chaque rapport C_{Pt}/C_{M} mesuré localement et le rapport [C_{Pt}/C_{M}]ₘ local moyen correspondant. On appelle ces valeurs les dispersions locales.
Selon l'invention, ladite dispersion est dite homogène, ce qui signifie que au moins 70%, de préférence au moins 80 %, des valeurs C_{Pt}/C_{M} pour le lit de particules de catalyseur s'écartent d'au plus 30 % du rapport local moyen.
On dit alors que la dispersion locale correspond pour au moins 70 % des particules à un intervalle de confiance meilleur que 30%.
De préférence, ce critère d'homogénéité des dispersions locales est ramené de 30 %, à de préférence 20 %, avantageusement à 15 % voire 10 % et jusqu'à même 7 % voire 5 %, c'est-à-dire que les valeurs s'écartent d'au plus 20 % du rapport local moyen.
Un paramètre très important pour les performances catalytiques des catalyseurs, en particulier ceux utilisés pour le réformage des essences et/ou la production d'aromatiques, est la teneur en halogène, et en particulier la concentration locale en halogène par rapport à la concentration locale en métal noble.
En effet, l'halogène (le plus souvent le chlore) est responsable de la fonction acide des catalyseurs qui assume l'isomérisation et la cyclisation des paraffines C₆-C₁₁. Il existe pour chaque catalyseur, une teneur optimale en halogène. Pour des teneurs en halogène inférieures à cette teneur optimale, les catalyseurs souffrent d'un défaut d'activité en particulier pour ce qui concerne la déshydrocyclisation des paraffines P₇-P₉. Pour des teneurs en halogène supérieures à cette teneur optimale, les catalyseurs présentent une activité craquante excessive se traduisant par une production importante de fuel gaz C₃-C₄, donc une chute des rendements en essence. La concentration optimale en halogène dépend de la nature du support, de sa surface spécifique et de sa structure. Elle est souvent voisine de 1,0 % poids dans les catalyseurs commerciaux mais peut être significativement inférieure ou supérieure à cette valeur pour certains supports particuliers, ou en présence d'éléments dopants tels le silicium inclus dans le support.
Il en résulte que des rapports des concentrations locales C_{Pt}/C_{X} significativement différents du rapport local moyen se traduisent par des performances catalytiques médiocres.
Le plus souvent, le rapport C_{Pt}/C_{M} local ou le rapport C_{Pt}/C_{X} local est constant le long du diamètre de la particule de catalyseur. Le profil C_{Pt}/C_{M} en fonction du diamètre est alors un "profil plat" de même que C_{Pt}, C_{M} ou C_{X} (selon le cas) selon le diamètre. Le métal noble et/ou le métal M et/ou l'halogène est uniformément réparti dans la particule.
Pour une particule (bille de préférence) donnée, on peut déterminer les valeurs absolues des différences entre chaque rapport C_{Pt}/C_{X} déterminé localement et le rapport moyen [C_{Pt}/C_{M}]_{P} ou respectivement [C_{Pt}/C_{X}]_{P} dans la particule. On appelle ces valeurs la dispersion radiale dans une particule.
Selon l'invention, la dite dispersion est dite homogène sur chaque particules, ce qui signifie qu'au moins 70 % des valeurs, de préférence 80 %, s'écartent d'au plus 30 % de la valeur moyenne dans la particule.
De préférence, cette dispersion radiale est ramenée de 30 % à de préférence 20 %, avantageusement à 15 % voire 10 % et jusqu'à même 7 % ou mieux 5 %.
De la même façon que précédemment, on dit alors que la dispersion radiale correspond, pour au moins 70 % des particules, à un intervalle de confiance meilleur que 30 %.
Pour un lot de catalyseur donné (par exemple, pour une bonne représentativité, au moins 5 particules, au moins 30 mesures par particule) on peut déterminer les valeurs absolues des différences entre chaque rapport C_{Pt}/C_{M} ou C_{Pt}/C_{X} déterminé localement et le rapport moyen global [C_{Pt}/C_{M}]_{L} ou respectivement [C_{Pt}/C_{X}]_{L} dans le lot (moyenne de tous les rapports dans toutes les particules). On appelle ces valeurs la dispersion globale.

Selon l'invention, ladite dispersion est dite homogène, ce qui signifie qu'au moins 70% des valeurs, de préférences 80 %, s'écartent d'au plus 30 % de la valeur moyenne dans le lot (rapport moyen global).
De préférence, cette dispersion globale est ramenée de 30 % à de préférence 20 %, avantageusement à 15 % voire 10 % et jusqu'à même 7 % voire 5 %.
De la même façon que précédemment, on dit alors que la dispersion globale correspond, pour au moins 70 % des particules, à un intervalle de confiance meilleur que 30 %.
Il est également intéressant de préparer des catalyseurs possédant des concentrations C_{Pt}, C_{M} ou C_{X} au coeur et en périphérie différentes. Ces catalyseurs présentent des profils de répartition dits en "cuvette" ou "en dôme". Ces catalyseurs avec C_{M} ou C_{Pt} en cuvette ou dôme sont intéressants pour certaines applications où des effets de vitesse diffusionnelle des réactifs ou des produits au sein du catalyseur sont recherchés.
Dans ce cas, la valeur du rapport [C_{Pt}/C_{M}]ₘ moyen local varie en fonction du diamètre de la particule. Cette variation peut suivre sensiblement une courbe parabolique.
Un autre type de répartition est celle en croûte où le métal noble et/ou métal M sont répartis en surface.
D'une façon générale, le rapport coeur/bord des concentrations C_{Pt}, C_{M} ou C_{X} au centre et en périphérie des particules de catalyseur peut varier de 0,1 à 3.
Dans la variante préférée, le catalyseur contient au moins un métal M et le métal noble (Pt) répartis uniformément dans la particule de catalyseur.
Selon une autre possibilité, le catalyseur contient au moins un métal M réparti uniformément dans toutes les particules de catalyseur, le métal noble étant réparti en "cuvette" dans lesdites particules. Dans une autre variante, au moins un métal M est réparti uniformément dans toutes les particules de catalyseur, le métal noble étant réparti en "croûte" dans lesdites particules.
Dans les cas ci-dessus, le métal M est l'étain. De façon préférée, le platine et l'étain sont répartis en cuvette.
De façon très préférée, le catalyseur contient au moins un métal M réparti uniformément dans toutes les particules de catalyseur, le métal noble étant réparti également uniformément dans les particules de catalyseur.

Dans une technique selon l'invention, le catalyseur est obtenu par imprégnation d'une solution organique d'au moins un composé dudit métal M, le volume de la solution étant de préférence égal au volume de rétention du support ou en excès par rapport à ce volume. Le métal M est introduit sous la forme d'au moins un composé organique choisi dans le groupe formé par les complexes des métaux M et les hydrocarbylmétaux tels que les alkyles, les cycloalkyles, les aryles, les alkylaryles et les arylakyles métaux. Après avoir laissé le contact entre le solide et la solution d'imprégnation pendant plusieurs heures, le produit est ensuite séché. On termine habituellement par une calcination entre 300 et 600°C, de préférence en effectuant un balayage d'air durant plusieurs heures. Le solide obtenu est ensuite imprégné à l'aide d'une solution aqueuse ou organique d'au moins un composé de métal du groupe VIII, le volume de la solution étant de préférence en excès par rapport au volume de rétention du support ou égal à ce volume. Après quelques heures de mise en contact, le produit obtenu est ensuite séché puis calciné sous air entre 300 et 600°C, de préférence en effectuant un balayage d'air durant plusieurs heures.
Dans une autre méthode selon l'invention, l'étain peut-être introduit lors de la synthèse de l'alumine selon une technique de type Sol-Gel (coprécipitation). Par exemple, un gel mixte étain alumine peut être obtenu en hydrolysant une solution organique de Sn(OR)₄ et de Al(OR')₄ dans un solvant tel ROH ou R'OH. R et R' peuvent désigner un groupement alkyl de type méthyl, éthyl, isopropyl, n-propyl, butyl, voire un groupement plus lourd, tel le n-hexyl. Le solvant alcoolique doit être déshydraté de façon poussée avant l'introduction des alcoolates d'étain et d'aluminium. L'hydrolyse peut être obtenue par addition d'eau au mélange, ou par addition d'un acide carboxylique anhydre suivie d'une éthérification (solvolyse) progressive sous l'action de la chaleur. La seconde technique conduit en général à des oxydes mixtes Al₂O₃-SnOₓ plus homogènes car elle conduit à une formation d'eau homogène et simultanée dans le mélange. La réactivité des alcoolates d'étain vis à vis de l'eau (hydrolyse) est en général supérieure à celle des alcoolates d'aluminium mais elle décroît avec la longueur de la chaîne alkyl R. On peut alors choisir des poids moléculaires des groupements R et R' tels que la réactivité des alcoolates d'aluminium et d'étain correspondants soient comparables. Ceci permet d'améliorer encore l'homogénéité de la répartition des métaux dans les gels mixtes obtenus. L'étain et l'aluminium peuvent également être coprécipités en solution aqueuse, par exemple en dissolvant SnCl₂ et AlCl3 en solution acidifiée par HCl, puis en versent la solution acide sous forme de microgouttes (brouillard, nébulisation) dans une solution d'eau dont le pH est compris entre 6 et 9.
Les métaux peuvent être introduits selon toutes les techniques connues de l'homme de l'art. L'introduction du métal additionnel peut être réalisée lors de n'importe quelle étape de fabrication du catalyseur, par exemple lors de la synthèse de l'alumine selon une technique de type sol-gel (coprécipitation) ou lors de la mise en forme du catalyseur (extrusion, oil-drop, ou toute technique connue).
Selon l'invention, le catalyseur décrit précédemment est mis en oeuvre dans les procédés de réformage des essences et de production d'aromatiques. Les procédés de réformage permettent d'augmenter l'indice d'octane des fractions essences provenant de la distillation du pétrole brut et/ou d'autres procédés de raffinage. Les procédés de production d'aromatiques fournissent les bases (benzène, toluène et xylènes) utilisables en pétrochimie. Ces procédés revêtent un intérêt supplémentaire en contribuant à la production de quantités importantes d'hydrogène indispensable pour les procédés d'hydrogénation et d'hydrotraitement de la raffinerie. Ces deux procédés se différencient par le choix des conditions opératoires et de la composition de la charge, qui sont connues de l'homme du métier.
D'une façon générale, la charge typique traitée par ces procédés contient des hydrocarbures paraffiniques, naphténiques et aromatiques contenant de 5 à 12 atomes de carbone par molécule. Cette charge est définie, entre autres, par sa densité et sa composition pondérale. Cette charge est mise en contact avec le catalyseur selon la présente invention à une température comprise entre 400 et 700°C. Le débit massique de charge traitée par unité de masse du catalyseur peut varier de 0,1 à 10 kg/kg/h. La pression opératoire peut être fixée entre la pression atmosphérique et 4 MPa. Une partie de l'hydrogène produit est recyclé selon un taux de recyclage molaire compris entre 0,1 et 10. Ce taux est le rapport molaire débit d'hydrogène recyclé sur débit de charge.
Les exemples suivants illustrent l'invention sans en limiter la portée.

### EXEMPLE 1 (selon l'art antérieur)

Un catalyseur A est préparé par imprégnation d'un complexe organométallique d'étain. Une quantité de 100 g de support alumine est mise en contact avec 60 cm³ d'une solution de n-heptane contenant 0,14 g d'étain sous la forme de tétrabutylétain Sn (Bu)₄. Le support est une alumine γ de surface spécifique 210 m² par gramme. Après 3 heures de réaction à la température ambiante, le solide est séché 1 heure à 120°C puis calciné à 500°C durant 2 heures. On met alors en contact 100 g de ce solide avec 500 cm³ d'un solution aqueuse d'acide chlorhydrique et d'acide hexachloroplatinique contenant 0,25 g de platine. On laisse 3 heures en contact, on sèche 1 heure à 120°C puis on calcine pendant 2 heures à 500 °C. Le rapport molaire Sn/Pt de ce catalyseur est de 0,92.

### EXEMPLE 2 (selon l'art antérieur)

Un catalyseur B contenant 0,3 % poids de platine et 0,32 % poids d'étain et de 1 % de chlore est préparé par imprégnation d'un complexe organométallique d'étain. Une quantité de 100 g de support alumine est mise en contact avec 60 cm3 d'une solution de n-heptane contenant 0,32 g d'étain sous la forme de tétrabutylétain Sn (Bu)₄. Le support est une alumine γ de surface spécifique 210 m² par gramme. Après 3 heures de réaction à la température ambiante, le solide est séché 1 heure à 120°C puis calciné à 500°C durant 2 heures.
Le platine est alors introduit sur 100 g de ce solide par mise en contact avec 500 cm3 d'une solution de toluène contenant 0,3 g de platine sous forme de bis acétylacétonate de platine. On laisse 3 heures en contact, on sèche 1 heure à 120°C puis on calcine pendant 2 heures à 500°C. On imprègne le solide par 600 cm3 d'une solution aqueuse d'acide chlorhydrique de façon à introduire 1 % pds Cl (par rapport au catalyseur). On laisse 3 heures en contact, on essore, on sèche le solide 1 heure à 120°C et on calcine 2 heures à 500°C. Le rapport molaire Sn/Pt de ce catalyseur est de 1,76.

### EXEMPLE 3 (selon l'invention)

Un catalyseur C est préparé par imprégnation d'un complexe organométallique d'étain. Une quantité de 100 g de support alumine est mise en contact avec 60 cm³ d'une solution de n-heptane contenant 0,45 g d'étain sous la forme de tétrabutylétain Sn (Bu)₄. Le support est une alumine γ de surface spécifique 210 m² par gramme. Après 3 heures de réaction à la température ambiante, le solide est séché 1 heure à 120°C puis calciné à 500°C durant 2 heures. On met alors en contact 100 g de ce solide avec 500 cm³ d'un solution aqueuse d'acide chlorhydrique et d'acide hexachloroplatinique contenant 0,30 g de platine. On laisse 3 heures en contact, on sèche 1 heure à 120°C puis on calcine pendant 2 heures à 500 °C. Le rapport molaire Sn/Pt de ce catalyseur est de 2,46.

### EXEMPLE 4 : Evaluation des performances en reformage catalytique.

Des échantillons des catalyseurs A, B, et C, dont les préparations ont été décrites précédemment, ont été testés en transformation d'une charge dont les caractéristiques sont les suivantes :
masse volumique à 20°C 0,753 kg/dm³
indice d'octane recherche ∼ 60
teneur en paraffines 49,4 % volume
teneur en naphtènes 35,1 % volume
teneur en aromatiques 15 ,5 % volume

Cette transformation est réalisée en présence d'hydrogène en respectant les conditions opératoires suivantes :
température 490 °C
pression totale 0,30 MPa
débit de charge 2,0 kg par kg de catalyseur

Avant injection de la charge, les catalyseurs sont activés à haute température sous hydrogène pendant 2 heures. Les performances obtenues après 24 h de fonctionnement sont reportées dans le tableau ci-après.

| Echantillon | rendement reformat (% poids) | indice d'octane recherche | rendement aromatiques (% poids) | rendement C4- (% poids) |
|---|---|---|---|---|
| A | 90,7 | 103,7 | 72,6 | 5,3 |
| B | 90,9 | 103,7 | 73,3 | 5,1 |
| C | 91,7 | 103,7 | 76,5 | 4,7 |

Le tableau montre que le catalyseur C selon la présente invention présente des performances substantiellement améliorées en reformage catalytique par rapport aux compositions selon l'art antérieur.

## Revendications

1. Catalyseur comprenant au moins une matrice amorphe, au moins un métal noble, ce métal noble étant le platine, au moins un métal additionnel M et au moins un halogène, et dans lequel, pour une particule de catalyseur,
C_{Pt} est la concentration locale en métal noble,
C_{M} est la concentration locale en métal additionnel M,
C_{X} est la concentration locale en halogène,
ledit catalyseur étant sous la forme d'un lit homogène de particules dans lequel la dispersion locale de la valeur C_{Pt} /C_{M} est dite homogène ce qui correspond, à ce que au moins 70 % des valeurs C_{Pt}/C_{M} pour le lit de particules de catalyseur s'écartent d'au plus 30 % du rapport local moyen, ledit catalyseur étant **caractérisé en ce que** le rapport molaire M/Pt au sein du catalyseur est compris entre 2 et 5 et **en ce que** le métal additionnel M est choisi dans le groupe formé par l'étain, le germanium et le plomb, dans lequel le métal M est l'étain.

2. Catalyseur selon la revendication 1, **caractérisé en ce que** il contient 0,01 - 2 % pds de métal noble, plus de 0,1 % à au plus 2 % pds de métal M et 0,1 - 15 % pds d'halogène.

3. Catalyseur selon l'une des revendications précédentes, **caractérisé en ce que** l'halogène est le chlore.

4. Catalyseur selon l'une des revendications précédentes, **caractérisé en ce que** le ratio entre les concentrations C_{Pt} ou C_{M} ou C_{X} au coeur du catalyseur et les concentrations respectives C_{P} t ou C_{M} ou C_{X} à la périphérie du catalyseur, est de 0,1 à 3.

5. Catalyseur selon l'une des revendications précédentes, **caractérisé en ce que** au moins un métal M est réparti uniformément dans tout le catalyseur, le métal noble étant réparti également uniformément dans la articule de catalyseur.

6. Procédé de transformation des hydrocarbures en composés aromatiques avec un catalyseur selon l'une des revendications précédentes.

7. Procédé selon la revendication 6 de reformage des essences, dans lequel la pression de ladite transformation est inférieure à 0,4 MPa.

## Patentansprüche

1. Katalysator, umfassend mindestens eine amorphe Matrix, mindestens ein Edelmetall, wobei dieses Edelmetall Platin ist, mindestens ein zusätzliches Metall M und mindestens ein Halogen, und wobei, für einen Katalysatorpartikel,
C_{Pt} die lokale Edelmetallkonzentration ist,
C_{M} die lokale Konzentration des zusätzlichen Metalls M ist,
C_{X} die lokale Halogenkonzentration ist,
wobei der Katalysator die Form eines homogenen Betts aus Katalysatorpartikeln aufweist, wobei die lokale Dispersion des Werts C_{Pt}/C_{M} oder C_{Pt}/C_{X} als homogen bezeichnet wird, was dem Fall entspricht, dass mindestens 70% der C_{Pt}/C_{M}-Werte für das Bett aus Katalysatorpartikeln um höchstens 30% vom lokalen mittleren Verhältnis abweichen, wobei der Katalysator **dadurch gekennzeichnet ist, dass** das Molverhältnis M/Pt innerhalb des Katalysators im Bereich zwischen 2 und 5 liegt und dadurch, dass das zusätzliche Metall M ausgewählt ist aus der Gruppe gebildet aus Zinn, Germanium und Blei, wobei das Metall M Zinn ist.

2. Katalysator nach Anspruch 1, **dadurch gekennzeichnet, dass** er 0,01 bis 2 Gew.-% Edelmetall, mehr als 0,1 bis höchstens 2 Gew.-% Metall M und 0,1 bis 15 Gew.-% Halogen enthält.

3. Katalysator nach einem der vorhergehenden Ansprüche, **dadurch gekennzeichnet, dass** es sich bei dem Halogen um Chlor handelt.

4. Katalysator nach einem der vorhergehenden Ansprüche, **dadurch gekennzeichnet, dass** das Verhältnis zwischen den Konzentrationen C_{Pt} oder C_{M} oder C_{X} im Kern des Katalysators und den jeweiligen Konzentrationen C_{Pt} oder C_{M} oder C_{X} am Rand des Katalysators 0,1 bis 3 beträgt.

5. Katalysator nach einem der vorhergehenden Ansprüche, **dadurch gekennzeichnet, dass** mindestens ein Metall M gleichmäßig im ganzen Katalysator verteilt ist, wobei das Edelmetall ebenfalls gleichmäßig im Katalysatorpartikel verteilt ist.

6. Verfahren zur Umwandlung von Kohlenwasserstoffen in aromatische Verbindungen mit einem Katalysator nach einem der vorhergehenden Ansprüche.

7. Verfahren nach Anspruch 6 zur Benzinreformierung, wobei der Druck der Umwandlung unterhalb von 0,4 MPa liegt.

## Claims

1. A catalyst comprising at least one amorphous matrix, at least one noble metal, this metal being platinum, at least one additional metal M and at least one halogen, and in which, for a catalyst particle,
C_{Pt} is the local concentration of noble metal Pt;
C_{M} is the local concentration of additional metal M;
C_{X} is the local concentration of halogen;
said catalyst being in the form of a homogeneous bed of catalyst particles, in which the local dispersion of the value C_{Pt}/C_{M} is termed homogeneous, which corresponds to the fact that at least 70% of the values C_{Pt}/C_{M} for the catalyst bed differ from the mean local ratio by at most 30%, said catalyst being **characterized in that** the mole ratio M/Pt is in the range 2 to 5 and **in that** the additional metal M is selected from the group constituted by tin, germanium and lead, in which the metal M is tin.

2. A catalyst according to claim 1, **characterized in that** it contains 0.01% to 2% by weight of noble metal, more than 0.1% to at most 2% by weight of metal M and 0.1 %-15% by weight of halogen.

3. A catalyst according to one of the preceding claims, **characterized in that** the halogen is chlorine.

4. A catalyst according to one of the preceding claims, **characterized in that** the ratio between the concentrations of C_{Pt} or C_{M} or C_{X} in the catalyst core and the respective concentrations C_{Pt} or C_{M} or C_{X} at the catalyst periphery is 0.1 to 3.

5. A catalyst according to one of the preceding claims, **characterized in that** at least one metal M is distributed uniformly throughout the catalyst, the noble metal also being distributed uniformly through the catalyst particle.

6. A process for transforming hydrocarbons into aromatic compounds using a catalyst according to one of the preceding claims.

7. A process according to claim 6, for reforming gasoline, in which the pressure of said transformation is less than 0.4 MPa.
